**Europäisches Patentamt**

**European Patent Office**

**Office européen des brevets**

(11) Veröffentlichungsnummer: **0 178 479**
**B1**

(12) **EUROPÄISCHE PATENTSCHRIFT**

(45) Veröffentlichungstag der Patentschrift:
23.11.88

(51) Int. Cl.⁴: **F 16 H 25/24**

(21) Anmeldenummer: **85111803.4**

(22) Anmeldetag: **18.09.85**

(54) Spindeltrieb.

(30) Priorität: **20.09.84 DE 3434520**

(43) Veröffentlichungstag der Anmeldung:
**23.04.86 Patentblatt 86/17**

(45) Bekanntmachung des Hinweises auf die Patenterteilung:
**23.11.88 Patentblatt 88/47**

(84) Benannte Vertragsstaaten:
**CH FR GB LI SE**

(56) Entgegenhaltungen:
**DE-A-2 129 345**
**DE-A-2 358 882**
**DE-A-2 725 054**
**DE-A-3 048 010**
**DE-A-3 106 221**
**DE-B-2 262 062**
**FR-A-2 147 638**
**FR-A-2 155 703**
**US-A-4 440 038**

**Einführung in die DIN-Normen, 1965, S.61 u. 62**

(73) Patentinhaber: **Gärtner, Robert, Dr., Freiherr- vom- Stein- Strasse 8, D-6308 Butzbach/Hessen (DE)**

(72) Erfinder: **Gärtner, Robert, Dr., Freiherr- vom- Stein- Strasse 8, D-6308 Butzbach/Hessen (DE)**

(74) Vertreter: **Wangemann, Horst, Dipl.- Ing., Stresemannstrasse 28, D-4000 Düsseldorf 1 (DE)**

EP 0 178 479 B1

## Beschreibung

Die Erfindung betrifft einen Spindeltrieb nach dem Oberbegriff des Hauptanspruches.

Derartige Spindeltriebe sind vielfach, z. B. durch die DE-A-2 137 636, DE-A-2 262 062 und DE-A-2 358 882 bekannt.

Der Erfindung liegt die Aufgabe zugrunde, einen derartigen Spindeltrieb so weiter zu bilden, daß eine möglichst hohe Vorschubgeschwindigkeit bei gleichzeitig minimalen Baumaßen mit konstruktiv einfachen Mitteln erreicht wird.

Zur Lösung dieser Aufgabe sieht die Erfindung die Merkmale des kennzeichnenden Teils des Hauptanspruches vor. Die Merkmale der Unteranspüche dienen der Weiterentwicklung bzw. Verbesserung der Merkmale des Hauptanspruches.

An sich wäre es möglich, eine hohe Vorschubgeschwindigkeit durch eine hohe Spindeldrehzahl zu erreichen. Demgegenüber sieht die Erfindung bei kleinem Spindeldurchmesser vor, die Steigung möglichst groß zu wählen, um hierdurch die Drehzahl in vertretbaren Grenzen zu halten. Dieses Verhältnis kommt in dem Steigungswinkel $\alpha$ der äußeren Schraubenlinie zum Ausdruck, der sich ergibt aus

$$tg\alpha = \frac{Steigung\ h}{\pi \cdot Spindelaußendurchmesser}$$

$$= \frac{h}{\pi \cdot D}$$

Erfindungsgemäß soll dieser Winkel 13° betragen.

Durch den kleinen Spindeldurchmesser ist eine erste Voraussetzung gegeben, den Wälzring und damit den Mutterkörper möglichst klein zu gestalten.

Ein weiterer Parameter hierfür ist der Flankenwinkel. Nimmt dieser zu, so kann der Wälzring in bestimmtem Maße verkleinert werden. Allerdings wird bei gleichmäßigem Anwachsen des Flankenwinkels der Raumgewinn durch Verkleinerung des Wälzringes immer geringer, da die Kräfte, die den Wälzring radial aus dem Gewinde herauszudrücken versuchen, unverhältnismäßig größer werden.

Erfahrungsgemäß können Systeme dieser Art Kräfte aufnehmen, die etwa 40 % der Eingangslast entsprechen. So ergibt sich für den Flankenwinkel $\gamma$, d. h. für den Winkel zwischen sich zwei gegenüberliegenden Flanken der Gewindegänge folgende Gleichung:

$$0,4 \cdot Last = tg\frac{\gamma}{2} \cdot Last$$

$$tg\frac{\gamma}{2} = 0,4$$

$$\frac{\gamma}{2} = 22° \rightarrow = 44°$$

$\frac{\gamma}{2}$ stellt dabei den Winkel zwischen einer Flanke des oder der Gewindegänge und der Normalen zur Spindellängsachse dar.

Der erfindungsgemäße Schraubentrieb weist damit einen Flankenwinkel $\gamma$ von 44° und einen Steigugswinkel $\alpha$ der äußeren Schraubenlinie von 13° auf. Bei Anwendung solcher Maße ist es möglich, bei relativ geringer Drehzahl die Vorschubgeschwindigkeit hoch zu halten und hierbei gleichzeitig bei geringem Spindeldurchmesser den Raumbedarf für den Spindeltrieb gering zu halten.

Auf der Zeichnung sind Ausführungsbeispiele der erfindungsgemäßen Spindel und der zur Anwendung gelangenden Wälzringe dargestellt und zwar zeigt

Fig. 1 die Anordnung zweier Wälzringe im Eingriff in das Gewinde einer Spindel,

Fig. 2 den Steigungswinkel der äußeren Schraubenlinie und Fig. 3

und 4 einen Schraubentrieb mit Trapezgewinde und einen Schraubentrieb mit Spitzgewinde.

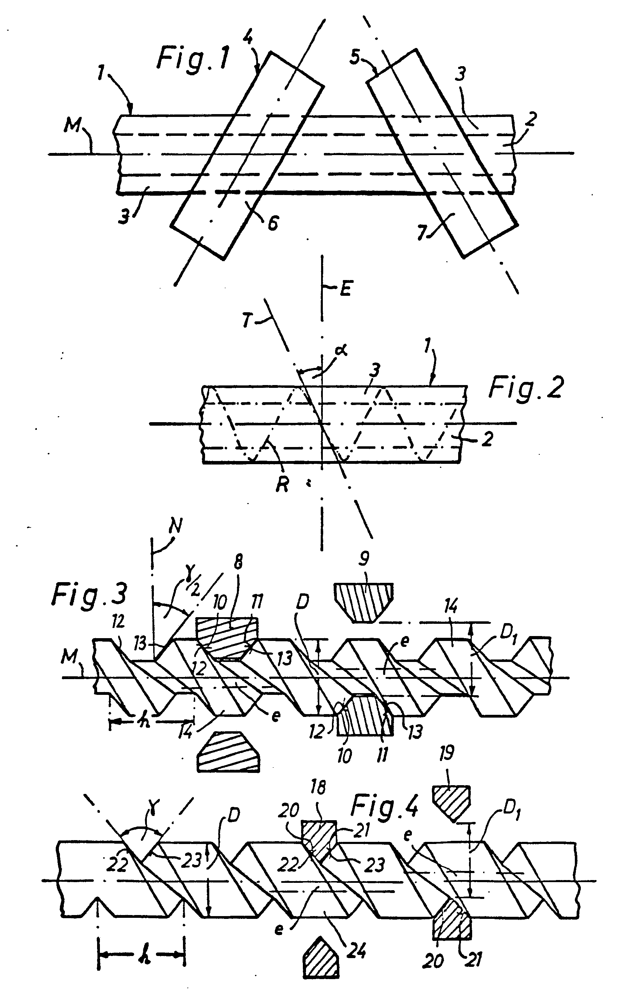

Fig. 1 läßt eine Gewindespindel 1 mit Gewindekern 2 und Spindelgewinde 3 erkennen, mit dem Wälzringe 8, 9 bzw. 18, 19, wie sie im Zusammenhang mit Fig. 3 und 4 erläutert sind, im Eingriff stehen. Diese Wälzringe sind mit dem Innenring eines Walzlagers 4, 5 einteilig ausgebildet oder mit diesem Innenring verbunden, während der Außenlaufring des Lagers in dem Lagerkörper 6, 7 der Lager 4, 5 gelagert ist, was Stand der Technik ist.

In Fig. 3 und 4 ist erkennbar, daß die Wälzringe 8, 9 bzw. 18, 19 exzentrisch einseitig gegenüber der Längsachse M der Spindel gehalten sind. Die Exzentrizität e, die Eingrifftiefe der Wälzringe in das Spindelgewinde und das Verhältnis des Spindeldurchmessers D zu dem Innendurchmesser $D_1$ der Wälzringe 8, 9 bzw. 18, 19 bestimmen u. a. die Berührungsfläche zwischen den Flanken 10, 11 bzw. 20, 21 der Walzringe 8, 9 bzw. 18, 19 an den Flanken 12, 13 bzw. 22, 23 der Gewindegänge 14 bzw. der Gewindespindel.

Erfindungsgemäß beträgt zur Lösung der gestellten Aufgabe der Steigungswinkel $\alpha$ (Fig. 2) zwischen einer Querebene E der Spindel 1 und Tangente T an die schraubenlinienförmig verlaufende äußere Randlinie R der Schraubengänge 14 bzw. 24 13°. Hierdurch ergibt sich eine vorteilhaft große Steigung h zwischen aufeinanderfolgenden Gewindegängen 14 bzw. 24.

Um ferner der gestellten Aufgabe bei möglichst geringer Drehzahl der Schraubenspindel 1 und einem geringen Außenumfang der Lagerkörper 6, 7 zu erreichen, ist ein Flankenwinkel $\gamma$ (Fig. 4) zwischen zwei benachbarten Flanken 10, 11 bzw. 22, 23 von 44° gewählt bzw. beträgt der Flankenwinkel zwischen einer Flanke eines Gewindeganges und der Normalen N zur Längsachse M der Spindel $\frac{\gamma}{2} = 22°$.

## Patentansprüche

1. Spindeltrieb mit einer Gewindespindel (1) und einem oder mehreren die Spindel exzentrisch umgebenden Wälzringen (8, 9; 18, 19), die sich unter einseitigem Eingriff in das Spindelgewinde (3) an diesem abwälzen und mit dem einen Laufring eines Wälzlagers (4, 5) einteilig ausgebildet oder verbunden sind, dessen anderer Laufring in einem längs der Spindel bewegbaren Mutterkörper od. dgl. gehalten ist, dadurch gekennzeichnet, daß das Spindelgewinde (3) einen Flankenwinkel (γ) seiner Gewindegänge von 44° und die äußere Schraubenlinie (R) des Spindelgewindes (3) einen Steigungswinkel (α) von 13° aufweist.

2. Spindeltrieb nach Anspruch 1, dadurch gekennzeichnet, daß der Wälzring (8, 9 bzw. 18, 19) mit beiden Flanken (10, 11 bzw. 20, 21) an den beiden Flanken (12, 13 bzw. 22, 23) der Gewindegänge (14 bzw. 24) anliegt.

3. Spindeltrieb nach Anspruch 1 und 2, dadurch gekennzeichnet, daß die Spindel zweigängig ist.

## Claims

1. Worm drive with a threaded spindle (1) and one or more rolling rings (8, 9; 18, 19) eccentrically surrounding the spindle which roll on the spindle thread (3) with one-sided engagement into it and are constructed integrally with, or are connected to, one of the ball races of a roller bearing (4, 5), the other ball race of which is retained in a nut body or the like which is movable along the spindle, characterised in that the spindle thread (3) has a flank angle (γ) of its threads of 44° and the outer screw line (R) of the spindle thread (3) has an angle of inclination (α) of 13°.

2. Worm drive according to claim 1, characterised in that the rolling ring (8, 9 or 18, 19) abuts with two flanks (10, 11 or 20, 21) on the two flanks (12, 13 or 22, 23) of the threads (14 or 24).

3. Worm drive according to claim 1 and 2, characterised in that the spindle is double-threaded.

## Revendications

1. Mécanisme a vis comprenant une broche filetée (1) et une ou plusieurs bagues de roulement (8, 9; 18, 19) entourant la broche de manière excentrique, bagues qui se déplacent auprès d'elle, en venant en prise sur un côté sur le filetage de la broche (3) et qui sont réalisées en une partie, ou bien reliées, à une bague de roulement d'un palier à roulement (4, 5), dont l'autre bague de roulement est maintenue dans un corps d'écrou, ou similaire, mobile le long de la broche, caractérisé en ce que le filetage de broche (3) présente un angle de flanc (γ) de ses pas de vis de 44° et que l'hélice (R) extérieure du filetage de la broche (3) fait un angle d'hélice (α) de 13°.

2. Mécanisme à vis selon la revendication 1, caractérisé en ce que la bague à roulement (8, 9, respectivement 18, 19) appuie avec les deux flancs (10, 11, respectivement 20, 21) sur les deux flancs (12, 13, respectivement 22, 23) du pas de vis (14, respectivement 24).

3. Mécanisme à vis selon la revendication 1 et 2, caractérisé en ce que la broche est à double pas.

Fig. 1

Fig. 2

Fig. 3

Fig. 4

0 178 479